(19) 

**Europäisches Patentamt**
**European Patent Office**
**Office européen des brevets**

(11) **EP 4 718 068 A1**

(12) **EUROPEAN PATENT APPLICATION**

(43) Date of publication:
**01.04.2026 Bulletin 2026/14**

(21) Application number: **25202333.8**

(22) Date of filing: **16.09.2025**

(51) International Patent Classification (IPC):
**G01N 27/623** $^{(2021.01)}$

(52) Cooperative Patent Classification (CPC):
**G01N 27/623; H01J 49/062**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.09.2024 US 202463700840 P**

(71) Applicant: **Bruker Switzerland AG
8117 Fällanden (CH)**

(72) Inventor: **Jones, Benjamin
Billerica, 01821 (US)**

(74) Representative: **Boßmeyer, Jens
Bruker Daltonics GmbH & Co. KG
Fahrenheitstraße 4
28359 Bremen (DE)**

(54) **METHOD AND ASSEMBLY FOR HANDLING GAS-PHASE IONS**

(57) The disclosure relates, in particular, to the operation of radio frequency (RF) ion guides which receive, intermediately store, separate according to a physical-chemical property, spatially translate and finally output gas-phase ions. RF ion guides according to the disclosure may be part of, or be coupled with, a mass analyzer. The disclosure serves to improve the space charge capacity of an RF ion guide, and to minimize fragmentation losses of ions contained in such RF ion guide over a wide range of masses and/or mobilities. The disclosure further serves to optimize the operational characteristics of an RF ion guide over a wide range of physical-chemical property values at minimal loss of ions due to fragmentation by RF ion heating.

FIGURE 4

EP 4 718 068 A1

**Description**

**BACKGROUND OF THE INVENTION**

Field of the Invention

The disclosure relates, in particular, to the operation of radio frequency (RF) ion guides which receive, intermediately store, separate according to a physical-chemical property, spatially translate and finally output gas-phase ions. RF ion guides according to the disclosure may be part of, or be coupled with, a mass analyzer.

Description of the Related Art

The Prior Art is explained hereinafter with reference to a special aspect. However, this should not be construed as limiting the invention disclosed below. Useful further developments and modifications of what is known from the Prior Art may also be applicable beyond the comparatively narrow scope of this introduction and will become readily apparent to skilled practitioners in the field after reading the disclosure of the invention following this introduction.

Ion mobility spectrometry (IMS) is an analytical technique that has been widely applied over the last five decades, primarily in chemical physics and analytical chemistry applications. Only relatively recently has the potential of IMS coupled to a mass spectrometer (IMS-MS) been explored for the separation, identification and quantification of biopolymers, such as peptides and proteins.

Trapped Ion Mobility Separation or Spectrometry (TIMS) is an IMS separation technique in the gas phase for increasing peak capacity and confidence in compound characterization, which resolves sample complexity with an added dimension of gas-phase separation, in addition to subsequent mass spectrometry and, as the case may be, to separation techniques before gas-phase ionization, such as liquid chromatography. Equally as important, a TIMS device may also serve to accumulate and concentrate gas-phase ions of a given mass and mobility, enabling an increase in sensitivity and speed along with the additional dimension of separation.

In the TIMS technique, ions are propelled through a TIMS RF ion guide by a gas flow. An electric field controls each ion from moving beyond a position defined by the ion's mobility, where the push it experiences from the gas flow matches the counteracting force of the electric field. Ramping down the electric field allows selectively releasing ions from the TIMS RF ion guide according to their mobility which depends on the collision cross section, mass, and charge state.

By coupling a TIMS device to the front of a quadrupole time-of-flight (QTOF) mass spectrometer, for example, ions can be accumulated for a specific amount of time before being released for MS analysis. Using the parallel accumulation-serial fragmentation (PASEF®) method, for instance, peptide ions are separated using TIMS, eluted in about 100 milliseconds and detected in the QTOF, generating a TIMS MS heat map. In the PASEF® method, the same TIMS separation is used with the quadrupole filter isolating a certain precursor ion species during its elution and immediately switching to the next precursor ion species. Precursor and fragment ion spectra are aligned by their coinciding mobility values, and chromatographic retention time, as the case may be.

The space charge capacity of a TIMS device is limited by the pseudo-potential which is generated by applying RF voltages to its electrodes which usually take the form of stacked ring electrodes. The pseudo-potential $U_{eff}$ is proportional to the square of the RF voltage amplitude $U_{RF}$ and inverse proportional to the square of the clock frequency of the RF voltage $f_{RF}$:

$$U_{eff} \sim \frac{U_{RF}{}^2}{f_{RF}{}^2}$$

The effective temperature of the ions in a TIMS device depends essentially on three terms:

$$T_{eff} = \underbrace{\frac{\mu}{m_g} T}_{gas} + \underbrace{\frac{\mu}{M} \frac{2\, q\, U_{eff}}{3\, k_B}}_{pseudo-potential} + \underbrace{\frac{\mu}{3\, k_B} \langle (K\, E_z)^2 \rangle}_{DC-potential}$$

with T = gas temperature, $m_g$ = mass of gas atoms/molecules; M = mass of gas-phase ions; q = charge of gas-phase ions; $\mu$ = reduced mass; $k_B$ = Boltzmann-constant; $U_{eff}$ = pseudo-potential; K = mobility at the gas temperature and pressure of the position of the gas-phase ion; $E_z$ = field strength of the axial electric DC field.

The pseudo-potential confines the ions radially to the axis of the TIMS device. If one of the two counteracting forces of the TIMS analyzer is a gas flow, the pseudo-potential should be high enough to focus the gas-phase ions into a region of the gas flow where the gas velocity is highest because the mobility resolution is approximately proportional to the gas velocity.

However, the pseudo-potential cannot be infinitely increased because the effective ion temperature is proportional to the pseudo-potential, the effect being called RF ion heating. Increasing the effective ion temperature over an ion species-dependent limit may result in fragmentation which may be undesired as it depletes gas-phase ions in an uncontrolled manner and renders mass spectra more unwieldy. Since the pseudo-potential is also inverse proportional to the mass-to-charge ratio (m/z) of the ions, small mass gas-phase ions, which usually feature high mobility, are affected more and tend to have higher effective ion temperatures compared to high mass gas-phase ions, which usually feature low mobility.

When the number of gas-phase ions to be stored is increased further and further, the resulting space charge pushes the gas-phase ions radially outward against the electrodes of the TIMS device where the pseudo-potential is higher. That means that increasing the number of stored ions, i.e., increasing the space charge load, is heating the ions more and more, which may ultimately result in loss of gas-phase ions, such as by neutralizing them on the electrodes, or in undesired fragmentation. In a setting, in which the RF voltages are chosen with such characteristics that they reasonably confine a broad range of masses, it would be the small mass gas-phase ions which are depleted first when the space charge load is increased since their positional expectation value lies further away from the axis than that of the high mass gas-phase ions.

In the following, a list of documents is cited which may be considered as belonging to background art related to the present disclosure:

The monograph by Dieter Gerlich "Inhomogeneous RF Fields: A Versatile Tool for the Study of Processes with Slow Ions" (Advances in Chemical Physics: State-Selected and State-To-State Ion-Molecule Reaction Dynamics, Part 1. Experiment, Volume 82, 1992) treats operation and effect of RF voltages in handling gas-phase ions, and is incorporated herewith by reference in its entirety.

The study by Aleksey V. Tolmachev et al. (Anal. Chem. 2000, 72, 970-978) discusses "Charge Capacity Limitations of Radio Frequency Ion Guides in Their Use for Improved Ion Accumulation and Trapping in Mass Spectrometry", and is incorporated herewith by reference in its entirety.

The patent application publication US 2006/0163470 A1 pertains to a method and system for producing an ion beam from an ion guide. In the method, ions are introduced into the ion guide, a radio frequency trapping field is generated in the ion guide to confine ions in a direction transverse to a longitudinal axis of the ion guide, a DC potential is generated along the longitudinal axis to direct ion motion along the longitudinal axis, a strength of the radio frequency trapping field is reduced toward an ion guide exit of the ion guide, and the ions are transmitted from the ion guide exit to form the ion beam. In the system, an ion guide is configured to transmit ions in a longitudinal axis of the ion guide and configured to trap ions in a direction transverse to the longitudinal axis via a radio frequency trapping field. The ion guide includes a segmented set of electrodes spaced along the longitudinal axis and an ion guide exit at the last of the segmented set of electrodes. A radio frequency device is configured to supply the radio frequency trapping field such that a strength of the radio frequency trapping field is reduced toward the ion guide exit.

The patent application publication WO 2007/079588 A1 presents an ion guide including multiple stages. An electric field within each stage guides ions along a guide axis. Within each stage, amplitude and frequency, and resolving potential of the electric field may be independently varied. The geometry of the rods maintains a similarly shaped field from stage to stage, allowing efficient guidance of the ions along the axis. In particular, each rod segment of the $i^{th}$ stage has a cross-sectional radius $r_i$, and a central axis located a distance $R_i + r_i$ from the guide axis. The ratio $r_i/R_i$ is substantially constant along the guide axis, thereby preserving the shape of the field.

The patent application publication WO 2008/047101 A2 discloses a collision or fragmentation cell comprising a plurality of electrodes wherein a first RF voltage is applied to an upstream group of electrodes and a second different RF voltage is applied to a downstream group of electrodes. The radial confinement of parent ions entering the collision or fragmentation cell is optimized by the first RF voltage applied to the upstream group of electrodes and the radial confinement of daughter or fragment ions produced within the collision or fragmentation cell is optimized by the second different RF voltage applied to the downstream group of electrodes.

The U.S. patent 9,972,480 B2 relates to an ion guide generating a radio frequency (RF) field to radially confine ions to an ion beam along a guide axis as the ions are transmitted through the ion guide. The effective potential of the RF field includes an alternating series of barriers and wells. Ions may be trapped in individual wells in mass-dependent order, with larger masses trapped closer to a guide exit than smaller masses. The RF field may be scanned so as to release the ions from the ion guide in mass-dependent order, with larger masses released before smaller masses. The operating conditions may be set such that ions over the entire mass range arrive at a desired downstream focal point simultaneously, for example, at an accelerator of a time-of-flight analyzer.

The patent application publication WO 2015/097462 A1 discloses a method of separating ions according to mass to charge ratio. The method comprises: providing a separation device comprising a plurality of electrodes; applying one or more transient DC voltages or potentials to at least some of said electrodes in order to urge ions in a first direction through said separation device; and providing a gas flow in a second direction which is substantially inclined or opposed to said first direction.

The patent application publication US 2020/0049660 A1 relates to a trapped ion mobility spectrometer (TIMS device) and proposes to use higher order (order N>2) linear multipole RF systems to accumulate and analyze ions at an electric DC field barrier, either pure higher order RF multipole systems or multipole RF systems with transitions from higher order towards lower order, e.g., from a linear octopolar RF system (N=4) to a linear quadrupole RF system (N=2) in front of the apex of the electric DC field barrier.

In view of the foregoing, there is still a need for improving space charge capacity of an RF ion guide and minimize fragmentation losses of ions contained in such RF ion guide over a wide range of masses and/or mobilities. There is further a need to optimize operational characteristics of an RF ion guide over a wide range of physical-chemical property values at minimal loss of ions due to fragmentation by RF ion heating. Further benefits and merits of the disclosed technical teaching will become apparent to those of skill in the art upon reading the following disclosure.

## SUMMARY OF THE INVENTION

In a first aspect, the disclosure relates to a method for handling gas-phase ions which feature a physical-chemical property, comprising: - providing an RF ion guide being designed and configured to accommodate a plurality of axial ranges; - introducing gas-phase ions into the RF ion guide; - providing a field of counteracting forces within the RF ion guide and separating the introduced gas-phase ions such that gas-phase ions of a first value or first value range of the physical-chemical property reside within a first axial range of the RF ion guide and gas-phase ions of a second value or second value range of the physical-chemical property reside within a second axial range of the RF ion guide, the second axial range not being spatially congruent with the first axial range; - providing first RF voltages to the first axial range and second RF voltages to the second axial range, without generating any substantial corrugation of axial potential within the first axial range and second axial range, respectively, and spatially confining the gas-phase ions of the first value or first value range and second value or second value range such that they do not substantially escape laterally from the first axial range and second axial range, respectively; - changing a balance of the counteracting forces and translating the gas-phase ions of the first value or first value range from the first axial range to a third axial range of the RF ion guide, the third axial range not being spatially congruent with the first axial range; - providing third RF voltages to the third axial range, without generating any substantial corrugation of axial potential within the third axial range, and spatially confining the translated gas-phase ions of the first value or first value range such that they do not substantially escape laterally from the third axial range, the third RF voltages not being parametrically congruent with the second RF voltages; and - providing conditions which allow gas-phase ions of the first value or first value range residing within the third axial range to exit the RF ion guide.

An axial range may be a finite spatial region extending along the axis of the RF ion guide. Typically, an RF ion guide may comprise a certain axial length, such as taken from among the group including or consisting of (in millimeters): 25, 50, 100, 150, 200, 250, 300, 350, 400, 450, 500, and any other suitable length between about 25 and 500 millimeters, so as to be able to provide room or space for a plurality of such axial ranges, which may extend over a distance on the order of a low single-digit value in millimeters. It is to be noted here that an axial range must not necessarily be identifiable by any structural or constructional feature of the RF ion guide, i.e., a static feature that does not change with time. Rather, an axial range may be a dynamic feature which may be temporarily present, and at a particular axial position, and then again may be absent from the RF ion guide, such as by a time profile of conditions of the field of counteracting forces within the RF ion guide which may be changed deliberately over time. An axis of the RF ion guide may generally be one of straight, linear, curved or bent, and non-linear.

A value range may designate a finite interval of values on a physical-chemical property scale, such as mass-to-charge ratio or ion mobility, as compared to a single individual value on such physical-chemical property scale. By way of example, the width of such finite interval may be definable by a resolving power of the separation which is conducted within the RF ion guide and disperses gas-phase ions according to the physical-chemical property in question.

Spatially congruent may mean that two axial ranges can be largely identical or fully identical. Largely identical may mean that two axial ranges overlap with each other to a high degree, such as taken from among the group including or consisting of (in percent): 80, 85, 90, 95, less than 100, and any other suitable percentage between about 80 and less than 100 percent. Fully identical may mean a complete spatial coinciding, 100 percent. Not spatially congruent may mean that two axial ranges show only minor overlap, such as taken from among the group including or consisting of (in percent): less than 80, less than or equal to 75, 70, 65, 60, 55, 50, 45, 40, 35, 30, 25, 20, 15, 10, 5, more than 0, and any other suitable percentage between about less than 80 and more than 0 percent, or do not overlap at all which equates with 0 percent spatial coinciding.

The amplitude of an RF voltage applied to an RF ion guide may be taken from among the group including or consisting of (in volts, peak-to-peak): 50, 100, 150, 200, 250, 300, 350, 400, 450, 500, 550, 600, 650, 700, 750, 800, 850, 900, 950, 1000, 1100, 1200, 1300, 1400, 1500, 1600, 1700, 1800, 1900, 2000, and any other suitable voltage between about 50 and 2000 volts. The clock frequency of an RF voltage applied to an RF ion guide may be taken from among the group including or consisting of (in kilohertz): 300, 400, 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000, and any other suitable clock frequency between about 300 and 3000 kilohertz. RF voltages may be applied to adjacent electrodes of the RF ion guide with two phases at the same amplitude and clock frequency, which can be more than 0°-180° apart.

The axial potential within the RF ion guide is a composite of the real electric potential, such as resulting from direct current (DC) voltages applied to the electrodes of the RF ion guide, and pseudo-potentials that result from the RF voltages applied to the electrodes of the RF ion guide. A pseudo-potential is, however, a mathematical approximation of the effect of the rapidly oscillating RF voltages, describing the effect on a macroscopic scale. In reality, gas-phase ions exposed to RF voltages, e.g., within the confines of an RF ion guide, are constantly agitated back and forth (dithering), in accordance with how the amplitude cycles from being attractive to being repulsive for the specific gas-phase ion under observation (microscopic scale). In an RF voltage assembly having continuous RF voltage-receiving electrodes and being arranged in perfect rotational symmetry around a common axis, such as a multipole rod assembly, e.g., a quadrupole, the axial potential should result in being completely uncorrugated (unless factors from outside the electrode assembly would leak through into the inner volume in between the electrodes), because, in this notional setting, the effect of the voltages applied to some of the rods would be exactly compensated by the voltages applied to the remaining rods. In case of an RF ion guide having electrodes, which are discontinuous along its axial extension, such as with a stacked ring RF ion guide, there always appear pseudo-potential bumps on the axis, going up and down in accordance with the steadily alternating sequence of electrode/gap between electrodes/electrode. However, by choosing proper dimensions of the electrodes and the gaps in between the electrodes as well as by adequately tuning the parameters of the RF voltages applied to the axially discontinuous electrodes, it is possible to keep such inevitable corrugation of axial potential minimal, in particular, in view of the thermal energy that gas-phase ions typically possess within the confines of an RF ion guide due to the presence of residual gas, for example.

In various embodiments, the physical-chemical property may be one of (i) mass, m, (ii) mass to charge ratio, m/z, (iii) collision cross section, CCS, (iv) collision cross section to charge ratio, CCS/z, and (v) gas-phase ion mobility, K. Gas-phase ions are characterized by their mass-to-charge ratio m/z. This ratio is the quotient of the ion's mass (in atomic mass units, amu) and its charge (in elementary charge units, e). The collision cross section (CCS) depends on the size and shape of a molecule and is a measure of the effective area that a gas-phase ion, which has the molecule as molecular substrate, presents for collisions with gas atoms or molecules. It is typically expressed in square angstroms ($Å^2$) and is determined by the ion's interactions with the gas atoms or molecules while it dwells within the IMS device. Gas-phase ion mobility is a measure of how a gas-phase ion interacts with a gas when subjected to an electric field.

In various embodiments, an axial range of the RF ion guide may comprise a plurality of at least one of (i) stacked ring electrodes and (ii) perimeter-segmented stacked ring electrodes. An RF ion guide having stacked ring electrodes may encompass a series of coaxially aligned conductive material rings or apertured plates, each separated by small gaps which can be maintained, for example, by appropriate spacers. These rings or apertured plates are supplied with an alternating RF potential, creating an oscillating electric field that confines and guides ions along the central axis of the device. The axially discontinuous structure of an RF ion guide with stacked ring electrodes allows establishing axial potential gradients for moving gas-phase ions in a desired direction. Further, segmenting stacked ring electrodes around their perimeter allows changing the electric configuration from a conventional dipolar one to one of higher order, such as quadrupolar, hexapolar, octopolar, and the like, including superpositions of the foregoing. Such higher order configuration facilitates shaping the confining forces within the RF ion guide, which prevent the gas-phase ions from substantially escaping laterally, to a desired condition.

In various embodiments, the RF ion guide may comprise at least one of (i) one or more ion tunnel sections and (ii) one or more ion funnel sections. Adjacent tunnel and funnel sections may transition smoothly into one another. A tunnel section may be characterized by a series of ring electrodes or apertured plate electrodes whose inner width, passable by the gas-phase ions, stays constant along the tunnel section. Tunnel and funnel sections may focus and transport a beam of gas-phase ions from one pressure region to a subsequent or downstream pressure region. A funnel section may include a series of ring or apertured plate electrodes with decreasing inner widths. Both tunnel sections as well as funnel sections may be connected to an RF voltage generator and a direct current voltage source. The RF voltage may create an oscillating electric field that traps and confines gas-phase ions radially, while the DC voltage may create a static electric field that pushes gas-phase ions axially. The RF voltage generator and/or the DC voltage source may be tunable to allow for flexibility of guiding conditions for gas-phase ions. Preferably, the RF and/or DC voltages may be tuned by an automated algorithm according to a predefined and programmed schedule.

In various embodiments, gas-phase ions may be introduced at a front end into the RF ion guide and may exit at an opposing rear end of the RF ion guide. A flow-through configuration of the RF ion guide may facilitate its (quasi-) continuous or stepwise continuous operation in that gas-phase ions may be (virtually) continuously or stepwise continuously received at the front end, processed in the middle part of the RF ion guide located between the front and rear ends, and output, released or ejected at the rear end of the RF ion guide.

In various embodiments, the field of counteracting forces may encompass forces resulting from physical phenomena within the RF ion guide taken from among the group including or consisting of: a gas flow, a direct current voltage gradient, an electric field gradient, a transient voltage. Providing a gas flow may render the RF ion guide suitable for collision cross section-resolved operation. In a trapped ion mobility separator (TIMS), for example, a (laminar) gas flow may be established in a stacked ring RF ion guide. By virtue of the RF voltages applied to the electrodes of the RF ion guide, gas-phase ions may be radially confined, and a DC voltage gradient may erect an electric field which acts in a direction opposite the gas flow direction. The pushing force of the gas flow and the withholding force of the spatially varying electric field strength provides distinct equilibrium positions for gas-phase ions as a function of their mobility. This spatial separation may then be substantially upheld when translating the gas-phase ions out of the RF ion guide and on to a subsequent ion processing device, such as a mass analyzer. Preferably, the RF voltages applied to a particular axial range within the RF ion guide may be chosen such that gas-phase ions residing in this particular axial range are substantially focused into a radial region of the axial range where a gas flow velocity is highest. For further details about the TIMS method, reference is made to the U.S. patent 7,838,826 B1 as well as the articles by Karsten Michelmann et al. (J. Am. Soc. Mass Spectrom. (2015) 26:14-24) and Joshua A. Silveira et al. (J. Am. Soc. Mas Spectrom. (2016) 27:585-595), all three of which are incorporated herein by reference in their entirety. An example for effect and utility of a transient voltage applied to an RF ion guide is shown in the article by Kevin Giles et al. (Rapid Commun. Mass Spectrom. 2004; 18: 2401-2414), for instance.

In various embodiments, the first RF voltages and second RF voltages may be one of (i) substantially parametrically identical and (ii) not substantially parametrically identical. A substantially parametrically identical configuration may allow the processing of gas-phase ions which are distinguished by a physical-chemical property, such as the mobility, which has no or little bearing on undesired effects like RF ion heating, while being hardly distinguishable by a physical-chemical property contributing to RF ion heating, such as the mass-to-charge ratio. Further, such mode of operation may accommodate structural and/or constructional features of the RF ion guide. A not substantially parametrically identical configuration may facilitate the most flexible processing of gas-phase ions since each of the first and second RF voltages may be customized to optimally spatially confine the gas-phase ions of a particular value or value range in the corresponding axial range, regardless of any discrepancy among the physical-chemical properties.

In various embodiments, the third RF voltages may substantially differ from the second RF voltages by at least one of (i) amplitude, (ii) clock frequency, (iii) phase, and (iv) duty cycle. The substantial difference may be set such that gas-phase ions of the first value or first value range and second value or second value range experience bespoke spatial confinement conditions which cause as little RF ion heating as possible. The RF voltages may have a sinusoidal, sawtooth, zigzag, square/rectangular, or any other suitable waveform. The RF voltages may comprise alternating current (AC) voltages. Duty cycle may mean that the duration of amplitude peak and valley is not identical, as with regular waveforms, but may differ by a predetermined amount, which could be approximated by a series expansion into contributions from a plurality of superposed foundational waveforms.

By way of example, a gas-phase ion having a mass-to-charge ratio of m/z 195 may be optimally radially confined in an axial range within the RF ion guide using an RF voltage amplitude of 100 volts peak-to-peak, while another gas-phase ion having a distinct mass-to-charge ratio of m/z 600 may be optimally confined in a spatially distinct downstream axial range using an RF voltage amplitude of 200 volts peak-to-peak. Once the gas-phase ion having m/z 195 is translated into another axial range within the RF ion guide, it is preferred to supply the corresponding RF ion guide electrodes with RF voltages having an amplitude of 100 volts peak-to-peak, regardless of what RF voltage had been applied before the m/z 195 gas-phase ion moved in. If operation of the RF ion guide is scheduled such that the m/z 195 and m/z 600 gas-phase ions are translated substantially simultaneously within the RF ion guide, and the m/z 195 gas-phase ion is translated into the axial range previously occupied by the m/z 600 gas-phase ion, it would mean that the RF voltage amplitude in this axial range is effectively halved during the process in order to optimize the radial confinement conditions for the translated gas-phase ion. Generally, the lower the mass-to-charge ratio m/z of a gas-phase ion is, the lower the RF voltage amplitude and, additionally or alternatively, the higher the clock frequency of the RF voltage can be in order to provide optimum radial confinement conditions with minimal RF ion heating.

In various embodiments, the conditions which allow gas-phase ions of the first value or first value range residing within the third axial range to exit the RF ion guide may comprise one of a (i) substantially continuous and (ii) stepwise continuous changing of the balance of the counteracting forces. Changing the balance of counteracting forces may allow outputting, releasing or ejecting gas-phase ions from the RF ion guide in a controlled manner, so as to, for example, time and coordinate the exiting with an operational cycle of an ion processing device which may be located downstream from the RF ion guide and receive the output, released or ejected gas-phase ions.

In various embodiments, the gas-phase ions of the second value or second value range may be translated from the second axial range to a fourth axial range of the RF ion guide, the fourth axial range not being spatially congruent with the second axial range, at substantially a same time as the gas-phase ions of the first value or first value range are translated from the first axial range to the third axial range, and wherein fourth RF voltages may be applied to the fourth axial range, without generating any substantial corrugation of axial potential within the fourth axial range, and the translated gas-phase ions of the second value or second value range may be spatially confined such that they do not substantially escape laterally from the fourth axial range, the fourth RF voltages not being parametrically congruent with both the first as well as the third RF voltages.

Preferably, the method may further comprise providing, subsequently, conditions which allow gas-phase ions of the second value or second value range residing within the fourth axial range to exit the RF ion guide. Further preferably, the method may further comprise substantially maintaining a spatial separation of the gas-phase ions of the first value or first value range and the second value or second value range, established by their residing within the first axial range and second axial range, respectively, after they have exited the RF ion guide. Substantially maintaining a spatial separation may facilitate and simplify the further processing of gas-phase ions which have been output, released or ejected thusly separated because the ion current is spread out spatially as well as temporally. When ion spectrometric data are acquired from the gas-phase ions by an appropriate detector, also the evaluation thereof may be facilitated and simplified due to detected individual ion signal transients being less populated, better manageable and easier processible.

In various embodiments, the third axial range may be substantially spatially congruent with the second axial range. Such mode of operation may facilitate a register-like processing of gas-phase ions within the RF ion guide. Once gas-phase ions of a particular value or value range have left an axial range within the RF ion guide due to a change in balance of the counteracting forces, for instance, gas-phase ions of different values or value ranges may move in and occupy this axial range. Making axial ranges within the RF ion guide available to a plurality of gas-phase ions of various values or various value ranges at various stages of an operational cycle may ease a space requirement for such RF ion guide assembly.

In various embodiments, the fourth RF voltages may be substantially parametrically identical with the second RF voltages. Such mode of operation may ensure that the gas-phase ions of the second value or second value range are exposed to optimally tuned RF voltages both in the second axial range as well as, after having been translated, in the fourth axial range, for example, so as to mitigate the risk of overly high RF ion heating, regardless of the position within the RF ion guide.

In various embodiments, at least one of the (i) first RF voltages, (ii) second RF voltages, (iii) third RF voltages, and (iv) fourth RF voltages may be set such that they do not generate any substantial corrugation of axial potential within the RF ion guide. Preferably, the RF voltages applied to the electrodes of the RF ion guide in the various axial ranges are tuned such that they do not generate any pronounced discontinuity effect at the interface of two adjacent axial ranges, or, in the case of partial overlap, in a transition region connecting two adjacent axial ranges within the RF ion guide.

In various embodiments, the first, second, third, and fourth RF voltages may generate a radial pseudo-potential well within the corresponding axial range of the RF ion guide, which substantially confines gas-phase ions. Preferably, having regard to an effective temperature $T_{eff}$ of gas-phase ions depending on three terms according to:

$$T_{eff} = \underbrace{\frac{\mu}{m_g} T}_{gas} + \underbrace{\frac{\mu}{M} \frac{2\,q\,U_{eff}}{3\,k_B}}_{pseudo-potential} + \underbrace{\frac{\mu}{3\,k_B} \langle (K\,E_z)^2 \rangle}_{DC-potential}$$

where $T$ = gas temperature; $m_g$ = mass of gas atoms/molecules; $M$ = mass of gas-phase ions; $q$ = charge of gas-phase ions; $\mu$ = reduced mass; $k_B$ = Boltzmann constant; $U_{eff}$ = pseudo-potential; $K$ = mobility at the gas temperature and pressure in the axial range where a gas-phase ion resides; and $E_z$ = field strength of an axial electric DC field; - a parametric configuration of the first, second, third, and fourth RF voltages may each be chosen such that the pseudo-potential middle term shown above is substantially minimized, so as to reduce the risk of RF ion heating-induced fragmentation and increase the space charge capacity of the RF ion guide.

In various embodiments, a parameter difference between the first RF voltages and second RF voltages may amount to a percentage taken from among the group including or consisting of: 19/20, 9/10, 17/20, 4/5, 3/4, 7/10, 13/20, 3/5, 11/20, 1/2, any other suitable percentage between about 19/20 and ½, or the inverse of the foregoing.

In a further aspect, the disclosure relates to an assembly for handling gas-phase ions which feature a physical-chemical property, comprising: - a source of gas-phase ions; - an RF ion guide being designed and configured to accommodate a plurality of axial ranges and being located downstream from, and being in fluid communication with the source of gas-phase ions for receiving gas-phase ions therefrom; - an ion processing device being located downstream from, and being in fluid communication with the RF ion guide for receiving gas-phase ions therefrom; and - a guidance and/or control system communicating with the source of gas-phase ions, the RF ion guide, and the ion processing device, wherein the guidance and/or control system is designed, configured and programmed to initiate execution of a method as hereinbefore described.

A source of gas-phase ions may apply one of the following principles: (i) electrospray Ionization (ESI); useful for large biomolecules like proteins and peptides; generates ions by applying a high voltage to a liquid to create an aerosol; (ii) matrix-assisted laser desorption/ionization (MALDI); often used for analyzing large biomolecules; involves embedding the sample in a matrix substance and using a laser to ionize the sample; (iii) atmospheric pressure chemical ionization (APCI);

often used in conjunction with liquid chromatography; ionizes the sample at atmospheric pressure using a corona discharge; (iv) desorption electrospray ionization (DESI); used for surface analysis and involves spraying charged droplets onto a sample surface to produce ions; (v) secondary ion mass spectrometry (SIMS); used for surface analysis by bombarding the sample with primary ions to eject secondary ions; and (vi) direct analysis in real time (DART), a prominent example of ambient ionization, i.e., not requiring laborious sample preparation. This foregoing list is not to be understood as closed. Rather, it is possible to apply principles of the present disclosure with a large host of ionization techniques beyond those explicitly identified above, to be chosen in line with the requirements of the particular experiment to be carried out.

An ion processing device may comprise one or more RF ion guides, such as ones conforming to the requirements of the present disclosure or more conventional ones, such as multipole rod assemblies, conventionally operated stacked ring ion guides or RF ion funnels. An ion processing device may also comprise one or more gas-phase ion analyzers, such as quadrupole mass filters or analyzers operating according to one or more of the following principles: (i) triple quadrupole mass analyzer; widely used; uses oscillating electric fields to filter ions based on their mass-to-charge ratio (m/z) in a first stage, fragments the ions in a second stage, and filters the fragment ions again in a third stage; (ii) time-of-flight (TOF) mass analyzer; measures the time it takes for ions to travel a fixed distance; (iii) ion trap mass analyzer; captures ions in a three-dimensional electric field and then sequentially ejects them to measure their m/z ratios; (iv) Fourier Transform (FT) mass analyzer, such as an Orbitrap® mass analyzer (Thermo Fisher Scientific) or an ion cyclotron resonance (ICR) cell; traps ions in an electrostatic or magnetic field, respectively, and measures their oscillation frequencies; (v) magnetic sector mass analyzer; uses a magnetic field to separate ions based on their m/z ratios; (vi) drift tube IMS; separates ions based on their mobility through a gas under the influence of an electric field; (vii) traveling wave IMS (TWIMS); uses a series of electric fields to push ions through a gas, separating them based on their mobility; (viii) field asymmetric IMS (FAIMS); separates ions based on their differential mobility in high and low electric fields. Again, the foregoing lists are not to be understood as closed. Rather, it is possible to apply principles of the present disclosure with a large host of ion processing devices, such as ion guides and ion analyzers, beyond those explicitly identified above, to be chosen in line with the requirements of the particular experiment to be carried out.

The guidance and/or control system may be a computer, a processor or another data processing and control unit that is capable of receiving, processing and forwarding data and issuing control commands derived therefrom. The guidance and/or control system may be organized centrally or de-centrally. Decentralized organization may mean that different assemblies of the device, some of which are spatially separated, are equipped with circuits or processing units (e.g., digital signal processors) that communicate with other assemblies and exchange data.

## BRIEF DESCRIPTION OF THE DRAWINGS

The invention can be better understood by referring to the following figures. The elements in the figures are not necessarily to scale, emphasis instead being placed upon illustrating the principles of the invention (often schematically):

Figure 1 schematically shows an assembly for combined ion mobility separation and mass analysis, which illustrates and contextualizes how an RF ion guide can be set up and operated in accordance with principles of the present disclosure.

Figure 2 corresponds to Fig. 7 from the monograph by Dieter Gerlich cited in the introduction.

Figure 3 corresponds to Fig. 8 from the monograph by Dieter Gerlich cited in the introduction.

Figure 4 illustrates a first embodiment of operating an RF ion guide according to principles of the present disclosure.

Figure 5 shows a second embodiment of operating an RF ion guide according to principles of the present disclosure.

Figure 6 shows a time profile of a ramping down of the RF voltage amplitude of any suitable axial range of an RF ion guide and simulation results of the resulting maximum effective temperature as well as the full width at half maximum (FWHM) of a gas-phase ion signal detected under such conditions.

Figure 7 depicts a third embodiment of operating an RF ion guide according to principles of the present disclosure.

Figure 8 presents the impact on the intensity of five peptide mass signals when carrying out a method according to principles of the present disclosure as compared to a conventional method of peptide analysis in a trapping ion mobility separator (TIMS) coupled to an OTOF mass analyzer.

## DETAILED DESCRIPTION

While the invention has been shown and described with reference to a number of different embodiments thereof, it will be recognized by those skilled in the art that various changes in form and detail may be made herein without departing from the scope of the invention as defined by the appended claims.

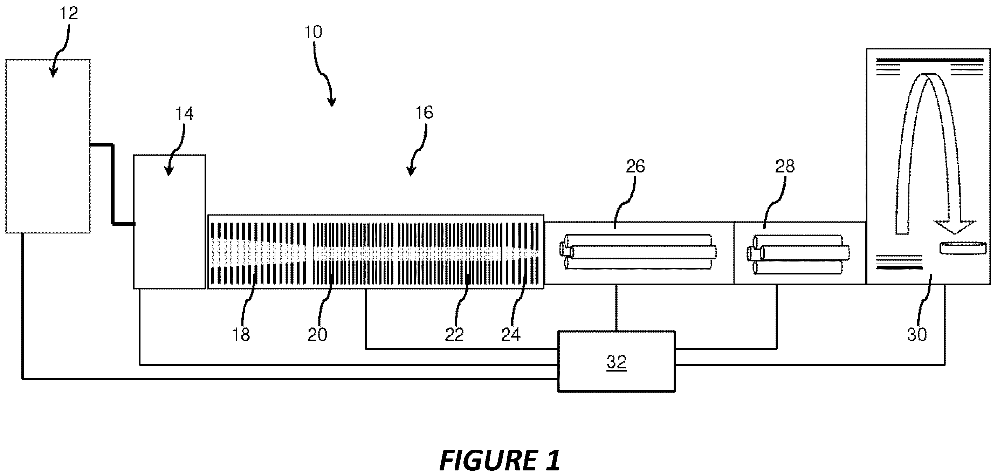

Figure 1 schematically illustrates an assembly for combined ion mobility separation and mass analysis (10) with which principles of the present disclosure can be implemented and serves to contextualize the present disclosure. Figure 1 schematically shows the structure of a mass spectrometer from the timsTOF product line (TIMS-Qq-OTOF) from Bruker.

Sample material or molecules from sample material can be ionized in an ionization region (14), e.g., by electrospraying the eluent of an upstream separator, such as a liquid chromatograph (12), or desorbing a deposited sample from a sample plate using matrix-assisted laser desorption/ionization, and form precursor ions. The precursor ions can be introduced into an ion mobility separator (IMS, 16), which sequentially releases the precursor ions sorted according to their ion mobility. In the embodiment shown, the IMS (16) may be a so-called trapped ion mobility separator (TIMS), in which the ions are preferably (temporarily) stored along an axial direction by the opposing forces of a gas flow and a DC electric field. The ions are radially confined by RF voltages.

The ion mobility separator (16) shown can comprise an RF ion inlet funnel (18) for collimation and radial compression of the ion beam, a first TIMS device (20), a second TIMS device (22) and an RF ion outlet funnel (24). Here, the first TIMS device (20) may be configured to continuously receive precursor ions and forward the received precursor ions to the second TIMS device (22) in a time-controlled manner and enable the execution of a parallel accumulation-serial fragmentation method (PASEF®, see e.g. Florian Meier et al., J Proteome Res. 2015 Dec. 4; 14(12): 5378-5387). The second TIMS device (22) may be configured to perform ion mobility separation runs in which the precursor ions are sequentially released as ion packets from the second TIMS device (22) separated according to their ion mobility. In the embodiment shown, precursor ions with lower ion mobility may be released prior to precursor ions with higher ion mobility in each ion mobility separation run. In other embodiments, the ion mobility separator may be a travelling wave IMS (TWIMS), a drift tube IMS (dt-IMS) or a field asymmetric IMS (FAIMS). These ion mobility separators can generally output precursor ions with higher ion mobility before precursor ions with lower ion mobility, which may be due to different operation principles.

The ion mobility separator (16) may be operated with ion mobility separation turned "on" to output ion packets sorted by mobility, and may also be operated with ion mobility separation turned "off" to pass incoming ions through the ion mobility separator (16) without ion mobility separation. In the latter case, the ion mobility separator (16) may be temporarily considered as a simple RF ion guide operated at slightly elevated pressure.

A mass filter (26) is provided downstream of the ion mobility separator (16). The mass filter (26) can be switched to selectively pass precursor ions with m/z values that fall within an adjustable mass transmission window. In the embodiment shown, the mass filter may be a quadrupole rod assembly as shown. The mass filter (26) can be operated with a narrow bandpass mode "on" to allow only ions with a comparatively narrow mass range m/z to pass through the mass filter (26), for example, within a range extending between 1 atomic mass unit (amu) and 25 amu from the lower limit to the upper limit, e.g., between 1000 amu and 1001 amu, or between 1000 amu and 1025 amu, and may also be operated with the narrow bandpass mode "off" or, in other words, in an RF-only mode, to allow substantially all incoming ions to pass through the mass filter (26) without narrow bandpass selection.

Precursor ions that fall within the current mass window of the quadrupole rod assembly may be passed on to a fragmentation device (28) where the precursor ions may be fragmented into fragment ions. In the embodiment shown, the fragmentation device (28) can be a collision cell in which a neutral gas atmosphere is maintained at slightly elevated pressure and into which ions can be injected after acceleration to fragment them by collisions with the gas molecules, such as molecular nitrogen, sulfur hexafluoride, any other suitable neutral gas, or mixtures thereof. However, other types of fragmentation devices are also conceivable, such as surface-induced dissociation fragmentation devices, electron transfer dissociation (ETD) devices, electron capture dissociation (ECD) devices, ultraviolet photodissociation (UVPD) devices, and the like.

The fragmentation device (28) or collision cell can be operated with a fragmentation mode "on" to dissociate incoming ions and generate fragment ions therefrom, and can also be operated with a fragmentation mode "off" to only capture and temporarily store incoming ions without breaking them into fragments and passing them on to the next component in the device (10). The latter mode may serve, for example, to acquire a survey scan of available precursor gas-phase ions.

The assembly (10) may further comprise a mass analyzer (30) that performs a mass or, more specifically, m/z measurement on the fragment ions and, optionally, on the precursor ions. In the embodiment shown, the mass analyzer is a time-of-flight (TOF) analyzer that uses orthogonal acceleration and includes a reflector to extend the ion trajectory and thereby improve mass resolution.

Finally, the assembly (10) comprises a guidance and/or control system (32) configured to coordinate and control each of the components of the apparatus (10), and also to perform data analysis of the mass analysis data or mass spectra obtained from the TOF analyzer (30) forming part of a spectral data set. The control system (32) may include one or more microprocessors and a memory for storing suitable computer code for performing system control and data analysis functions. The control system (32) may comprise a single unit or may be a distributed system comprising various control units with individual processors and/or specialized control circuits, ASICs and the like that communicate with each other. Contrary to the representation in Figure 1, the guidance and/or control system (32) can also be organized in a decentralized manner, i.e., different sub-processors can be arranged in a distributed manner on different components of the overall analytical assembly (10).

The assembly (10) shown in Figure 1 can operate in different modes, of which two stand out, which can be referred to as MS1 and MS2 mode (the latter also referred to as tandem MS or MS/MS). When operating in MS1 mode, the mass filter (26) and the fragmentation device (28) can be deactivated so that all precursor ions released sequentially from the second TIMS device (22) are directed to the TOF analyzer (30) without mass selection and fragmentation to obtain high-resolution m/z spectral data of the precursor ions at high speed (survey scan). These precursor ion spectral data can be used for the selection of gas-phase ion species of interest and therefore to be fragmented in a subsequent measurement run, e.g., using features or peaks of the precursor ions in a mass mobility map.

When operating in MS2 mode, the mass filter (26) and the fragmentation device (28) can be activated so that the incoming precursor ions are mobility-separated, selected according to the set mass transmission window of the mass filter (26) and then fragmented in the fragmentation device (28), to thereby obtain high-resolution m/z spectra of the fragment ions resulting from the precursor ions in the fragmentation device (28), which enables the sorting of the features or peaks in a resulting spectral data set according to a higher number of physical-chemical properties than in MS1 mode. It is understood that the fragment ions may be assigned a corresponding mobility or mobility-related value, such as the collision cross section (CCS) or the voltage setting of the second TIMS device (22) upon release, in addition to any other sorting parameter that may be applicable, such as the retention time resulting from separation by liquid chromatography (e.g., from pre-ionization separator 12).

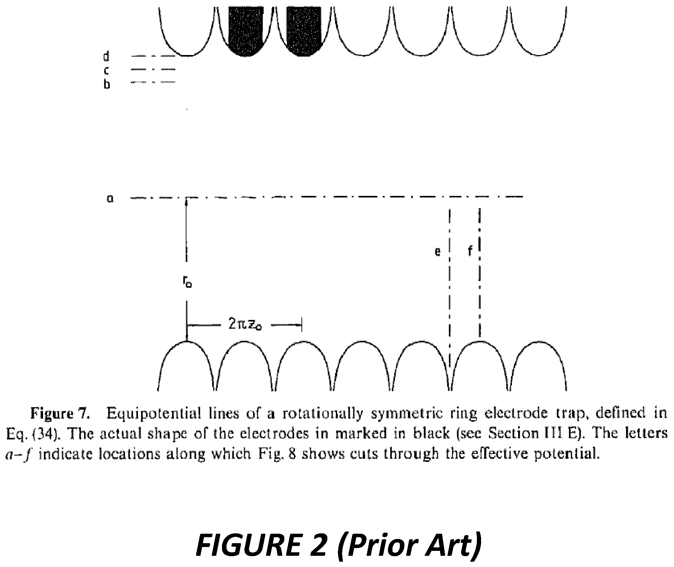

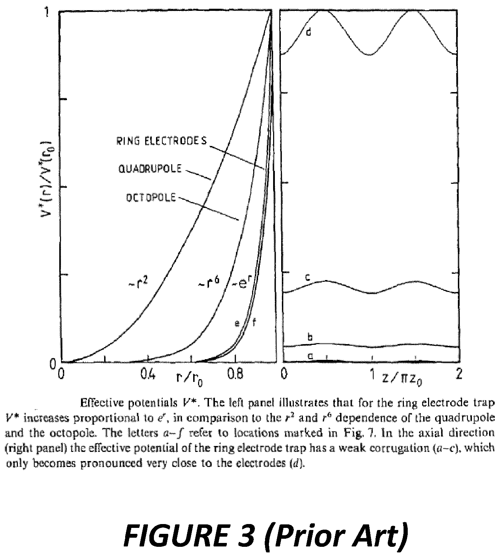

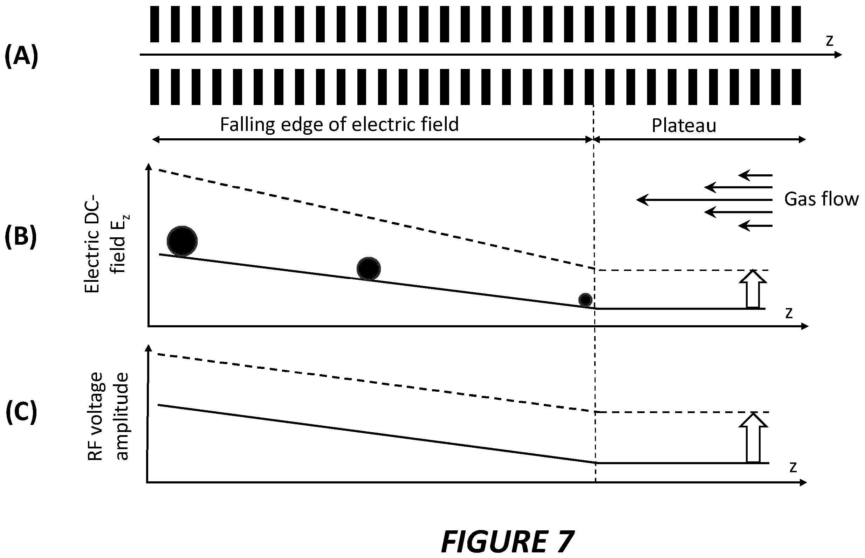

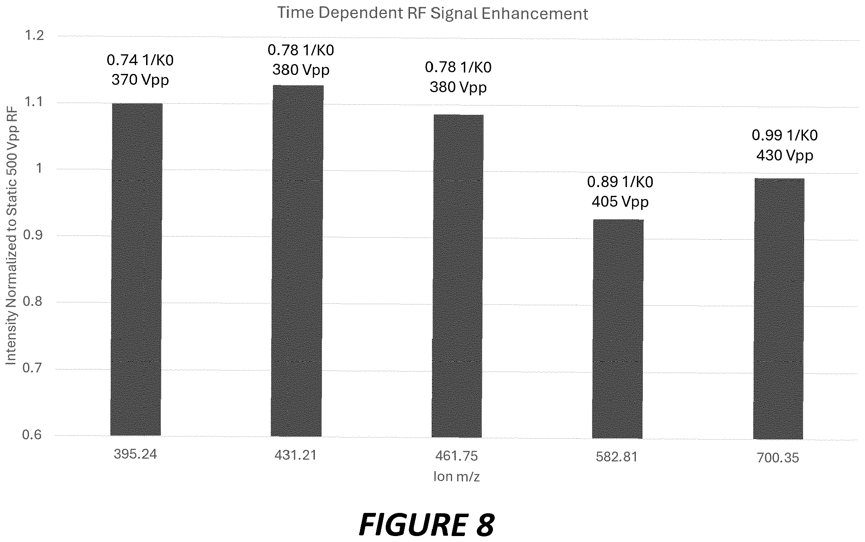

Figure 2 and Figure 3 are taken from the monograph by Dieter Gerlich mentioned in the introduction (there Figs. 7 and 8) and illustrate the pseudo-potential conditions in various RF ion guides (in the original figure caption, it is called effective potential). Figure 2 schematically illustrates the structure of a stacked ring RF ion guide. The letters a-f indicate locations along which Figure 3 cuts through the pseudo-potential. The left diagram of Figure 3 shows the radial pseudo-potential well as a function of the normalized radius of the inner width in between the electrodes constituting the RF ion guide in question. While a quadrupole rod assembly features the steepest rise in pseudo-potential, meaning that gas-phase ions contained within such quadrupole rod assembly experience the strongest restoring force toward the axis, a stacked ring RF ion guide offers comparatively the largest area around the central axis where the pseudo-potential is very small or virtually zero before it rises in the radially outward direction. The right diagram of Figure 3 shows the inevitable corrugation of axial potential in a stacked ring RF ion guide as a function of axial position. Having its highest amplitude at a radial position close to the inward-facing surfaces of the stacked ring electrodes (letter d), the corrugation of the axial potential (letter a) is, while calculable, tiny and in most cases negligible for the purposes of gas-phase ion handling, in particular, in view of the thermal energies that gas-phase ions contained in such RF ion guide typically possess. In various embodiments, not generating any substantial corrugation of axial potential may mean that the RF voltage-incurred pseudo-potential amplitude on the axis of the RF ion guide is not larger than 15%, 14%, 13%, 12%, 11%, 10%, 9%, 8%, 7%, 6%, 5%, 4%, 3%, 2%, 1%, or any other suitable percentage lower than 15% of the pseudo-potential close to an inward-facing surface of the electrodes of the RF ion guide, in analogy to the vertical scale as shown in the right diagram of Figure 3.

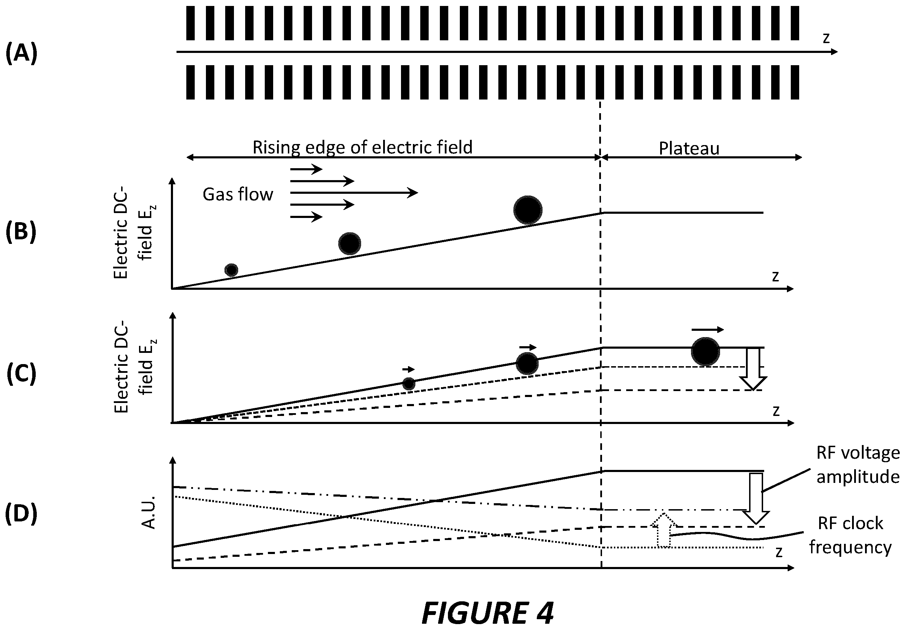

Figure 4, panel (A), schematically illustrates an RF ion guide designed and configured to be operated according to principles of the present disclosure. The RF ion guide comprises an assembly of stacked ring electrodes (in black), which may be monolithic or segmented along their circumferential perimeter, are aligned with a central axis z and have constant inner width along its axial extension. An electrically insulating and chemically largely inert material, located at an outer periphery of the stacked ring electrodes (not shown), may establish a fluid-dynamically closed cylindrical tube. Due to this tubular construction, a gas flow can be established within the confines of the RF ion guide, such as flowing from left to right, where, in case of a laminar flow, the highest gas flow velocity results at the center while the gas flow velocity is zero at the inward-facing surfaces of the electrodes.

The individual ring electrodes, whether monolithic or segmented, may be connected to various voltage sources which supply them with RF voltages as well as DC voltages. The voltage sources may be tunable insofar as individual electrodes receive an RF voltage with bespoke parameters which may differ from those of RF voltages that adjacent or neighboring ring electrodes receive. While it is possible to supply each ring electrode with an RF voltage of individual configuration, it is likewise possible to group certain numbers of adjacent or neighboring ring electrodes together, such as groups of two or more adjacent or neighboring ring electrodes, so as to supply them collectively with RF voltages of individual configuration, seen along the axis z of the RF ion guide. In a manner similar to the supply of RF voltages, each ring electrode may receive a bespoke and individual DC voltage, which may serve to establish an axial electric field gradient within the confines of the RF ion guide. The DC voltage gradient may serve to establish an electric field gradient which rises, e.g., linearly, along the axis z from left to right until it reaches a plateau region where the electric field strength $E_z$ does not change anymore as a function of axial position, see Figure 4, panel (B), to be discussed further below.

The assembly illustrated schematically in Figure 4, panel (A), may be operated as a trapped ion mobility separator (TIMS), for example, located in place of a TIMS device in Figure 1 at numeral (20) or numeral (22). Gas-phase ions may enter the RF ion guide at an entrance end on the lefthand side. The gas flow entrains the gas-phase ions and exerts an axial drag force which depends on the collision cross section of the gas-phase ion under investigation. In Figure 4, panel (B), which shows the initial electric field as a function of axial position within the RF ion guide, the gas-phase ions are schematically represented by filled circles of different size. The larger the circle is, the larger its collision cross section and hence the lower its mobility. The rising edge of the axial electric field indicates the steadily rising withholding force exerted on the gas-phase ions by virtue of their charge q. For the initial, quasi-stationary condition illustrated in Figure 4, panel (B), each gas-phase ion having a particular collision cross section or mobility may have an axial equilibrium position where the drag force by the gas flow and the withholding force by the axial electric field just compensate each other so that the gas-phase ion under investigation comes substantially to rest. As shown, the gas-phase ions of low mobility (large filled circle) reach their axial equilibrium position closer to the plateau region than gas-phase ions of higher mobility (medium-sized and small filled circles).

Once quasi-stationary separation of gas-phase ions at the rising edge of the electric field is accomplished, as depicted in Figure 4, panel (B), the supply of gas-phase ions to the RF ion guide may be stopped, for example, by energizing an ion gate located in front of the entrance to the RF ion guide (not shown), and a scanning phase of the electric field strength may commence, as illustrated by the hollow arrow pointing downward in Figure 4, panel (C). By gradually decreasing the axial electric field strength on the rising edge as well as plateau regions, the equilibrium conditions for the gas-phase ions are stepwise or continuously changed so that gas-phase ions are translated further to the right, i.e., higher up on the rising edge even though its absolute amplitude goes down. Figure 4, panel (C), shows an intermediate stage (middle dashed profile line) of the scanning from the high original electric field strength (solid profile line) to the ultimate low electric field strength (lower dashed profile line). Those gas-phase ions, which have been held on the rising electric field edge close to the transition into the plateau region during the quasi-stationary condition of the electric field (Figure 4, panel (B)), then start to be continuously translated or drift through the plateau region toward the exit end at the righthand side of the RF ion guide whence, once having exited, they may move on to subsequent ion processing devices, as illustrated by way of example in the context of Figure 1.

As set out previously, Figure 4, panel (B), shows the situation shortly before the scanning phase of the electric field strength commences. The gas-phase ions of lowest mobility have moved into an axial range in the upper part of the rising electric field edge, the gas-phase ions of medium mobility reside in a central axial range of the rising edge, and the gas-phase ions of lowest mobility still remain withheld in an axial range close to the foot of the rising edge. Since ion mobility shows a non-negligible correlation with gas-phase ion mass, as reported, e.g., by John McLean (J Am Soc Mass Spectrom 2009, 20, 1775-1781) for various molecular classes, and since the gas-phase ion mass obviously defines the gas-phase ion mass-to-charge ratio, the three parcels of gas-phase ions withheld in different axial ranges within the RF ion guide would benefit from different RF voltage settings for experiencing an optimal pseudo-potential well and being optimally confined radially.

In a conventional TIMS separator, the amplitude of the applied RF voltages does not change as a function of position along its axis. However, such conventional operation may lead to suboptimal radial confining of gas-phase ions because the risk of RF ion heating becoming too high and causing loss or uncontrolled fragmentation of gas-phase ions correlates with the square of the RF voltage amplitude and inversely correlates with the square of the clock frequency of the RF voltages used to radially confine the gas-phase ions. That is, while an RF voltage of homogenous configuration along the axis may be well suited to radially confine gas-phase ions of, e.g., low mobility (large filled circle) and medium mobility (medium-large filled circle), it might operate already at the mass-to-charge ratio-dependent threshold of causing too much RF ion heating of the gas-phase ion of high mobility (small filled circle). Such scenario may happen, in particular, when the space charge load, or simply speaking, the number of gas-phase ions introduced into, and contained within the RF ion guide, is high.

In order to mitigate the adverse effect of such undifferentiated RF voltage setting, and referring to the embodiment of Figure 4, the present disclosure suggests imparting one or more of the RF voltage parameters with a gradient in space and a gradient in time. The RF voltage parameter may be taken from among the group including or consisting of: amplitude, clock frequency, phase, and duty cycle. For the example of RF voltage amplitude, gradient in space may mean that the RF voltage amplitude rises concomitantly with the rising edge of electric field strength. This is illustrated in Figure 4, panel (D), by the profile having a solid line and the profile having a dashed line. By choosing the right slope of the change in amplitude along the rising electric field edge, improved radial confining conditions can be provided for each gas-phase ion at its axial equilibrium position or occupied axial range during the quasi-stationary phase (Figure 4, panel (B)). Gradient in time may mean that the RF voltage amplitude is likewise gradually decreased during, and concomitantly with the scanning phase of the electric field strength. This is illustrated in Figure 4, panel (D), by a hollow arrow which, in case of amplitude change, springs from the solid line profile for indicating the initial setting and points toward the dashed line profile indicating and end condition when the scanning phase of the electric field has been concluded. This means that, as the axial equilibrium position changes on the rising edge, and also during the elution or drifting phase on the plateau region of the electric field, in other words, when the gas-phase ions are translated to the right in the example shown, such as evident from Figure 4, panel (C), each translated gas-phase ion will always be exposed to RF voltages for radial confining, which have parameters that are better suited to avoid excessive RF ion heating than homogenous RF voltages, the parameters of which do not show any spatial or temporal change, neither during the quasi-stationary condition as illustrated in Figure 4, panel (B), nor during the further operational cycle of the RF ion guide operated as TIMS separator, as indicated by Figure 4, panel (C).

For the embodiment of Figure 4, the change in the RF voltage in space and time has been illustrated on the example of the RF voltage amplitude. It will be understood by those of skill in the art that the same beneficial effect could be achieved by changing a different parameter of the RF voltage. The clock frequency of the RF voltage, for example, might equally show a change in space and time, such as depicted in Figure 4, panel (D), by the profiles having dash-dotted and dotted lines. A change in space could manifest itself in a steady decrease of clock frequency along the extension of the RF ion guide, with a highest value initially at the foot of the rising electric field edge and a lowest (constant) value at the plateau region. This may mitigate effects of RF ion heating since the pseudo-potential magnitude is inversely proportional to the square of the clock frequency. Likewise, a change in time could manifest itself in a concomitant, i.e., stepwise or continuous, increase of clock frequency as the scanning of the electric field strength progresses, as indicated by the dotted hollow arrow shown in Figure 4, panel (D), springing from the dotted line indicating the initial condition and pointing to the dash-dotted line indicating the ultimate condition.

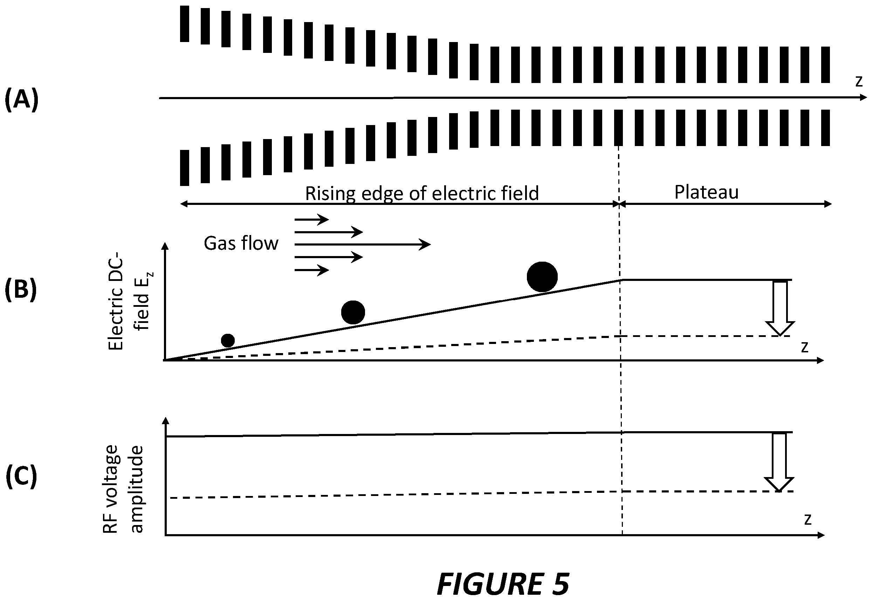

Figure 5 shows schematically an alternative embodiment. In the following, the description of the alternative embodiment will focus on the differences to the embodiment expounded with reference to Figure 4. The main difference is that the RF ion guide, as depicted in Figure 5, panel (A), does not consist solely of an RF tunnel section, having stacked ring electrodes with homogenous inner width along its axial extension, but combines an initial RF funnel section with a subsequent RF tunnel section. The RF funnel section is characterized by ring electrodes or segmented ring electrodes which have inner widths that become increasingly smaller, seen from left to right, until they reach the size of the openings prevalent in the subsequent RF tunnel section. Since the inward-facing surfaces of the ring electrodes, whether they are monolithic or segmented, at the entrance end of the RF funnel section are further away from the central axis z, more space is left in the volume in between the openings of the stacked ring electrodes to receive and store gas-phase ions. Since this special constructional feature already mitigates effects of RF ion heating, to the highest degree at the most upstream parts of the RF funnel section where the inner width is broadest, the application of the RF voltages to the ring electrodes can be conducted in a manner different to, and in fact simpler than the one explained with reference to the example of the embodiment from Figure 4.

Figure 5, panel (B), again shows the initial quasi-stationary condition of the axial electric field, similar to Figure 4, panel (B). Another major difference to the embodiment of Figure 4 is the amplitude profile of the RF voltage used for radially confining gas-phase ions both in the RF funnel as well as the RF tunnel sections. In the embodiment shown in Figure 5, the RF voltage amplitude does not feature a change in space. Rather, a homogeneous RF voltage amplitude is applied to all stacked ring electrodes extending from the RF funnel section right into and through the RF tunnel section. Since the gas-phase ions of high mobility (small filled circle) and, by correlation therewith, comparatively low mass or mass-to-charge ratio, have an axial equilibrium position in an axial range of the multi-sectioned RF ion guide which, by virtue of its construction, offers already more space for accepting and holding gas-phase ions, despite the RF voltage amplitude being homogeneous along the extension of the whole RF ion guide depicted, the risk or danger of RF ion heating is significantly reduced.

Once the scanning phase of the electric field strength has commenced, as indicated in Figure 5, panel (B), by the hollow arrow pointing from the solid line profile to the dashed line profile, the spatially homogeneous RF voltage amplitude is changed concomitantly with the change in electric field strength, as indicated by the hollow arrow pointing from the solid line profile in Figure 5, panel (C), to the dashed line profile. Since the axial equilibrium positions of the gas-phase ions tend to be translated further to the right as the electric field strength is ramped down, the gas-phase ions increasingly feel or see the confining force of the RF voltages in the regions of smaller inner width of the stacked ring electrodes, i.e., in the right part of the RF funnel section as well as throughout the RF tunnel section. In order to mitigate any adverse effects of these RF voltages becoming too large, in particular, for the small mass gas-phase ions, the RF voltage amplitude is ramped down in sync.

In analogy to the embodiment of Figure 4, also in the embodiment of Figure 5, the clock frequency could be changed in sync with the electric field change. This would then mean that the clock frequency is initially held at an appropriately low level (constant along the axial extension of the RF ion guide) and then ramped up in sync with the lowering of the electric field strength, which is not illustrated in Figure 5, panel (C), however, for the sake of clarity.

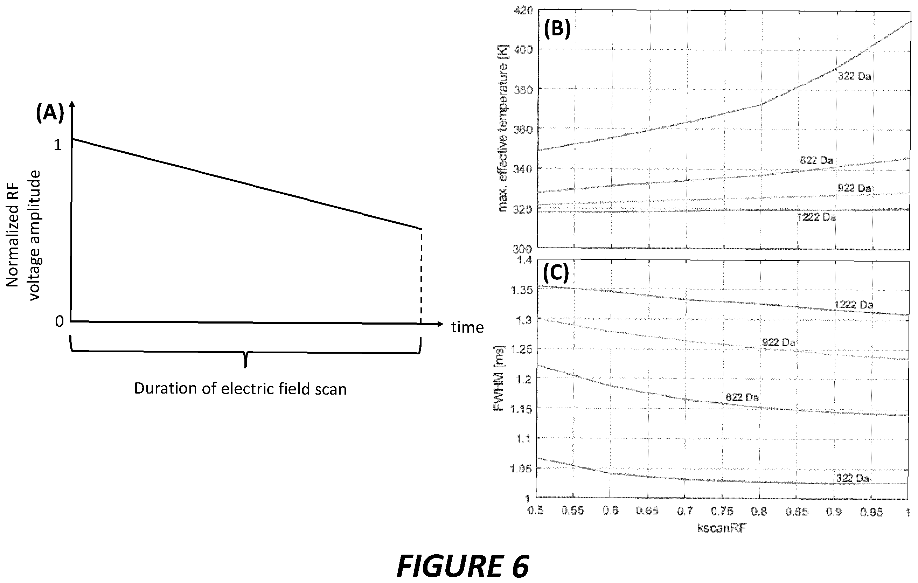

Figure 6, panel (A), shows a schematic plot diagram of the time dependence of the RF voltage amplitude at any given axial range position within an RF ion guide, as illustrated schematically in Figure 5, panel (A), during the scanning of the electric field strength, depicted in Figure 5, panel (B). During the scanning, the RF voltage amplitude is ramped down linearly to about half its original normalized value. Since the pseudo-potential scales with the square of the RF voltage amplitude, a halving in amplitude leads to a quarter in pseudo-potential magnitude.

Figure 6, panel (B), shows simulation results illustrating the effect of ramping down the RF voltage amplitude on the maximum effective temperature of a gas-phase ion for the four different gas phase ion species m/z 322, m/z 622, m/z 922, and m/z 1222, as they are often used in lockmass calibration mixtures. As can be seen, while the effect of ramping down the RF voltage amplitude is smallest on the high mass gas-phase ions m/z 1222 and m/z 922, it becomes more pronounced with the medium-sized gas-phase ion m/z 622 and is strongest with the low mass gas-phase ion m/z 322. The simulation result suggests that adapting parameters of the RF voltages used for radial confining of gas-phase ions to the most likely mass-to-charge ratio of the gas-phase ions, significantly reduces the risk of excessive RF ion heating and may therefore keep the proneness to fragmentation in check.

Figure 6, panel (C), illustrates the effect the ramping down of the RF voltage amplitude has on the mass resolution as manifest by the width of the ion signals detected. If the radial confining force of the pseudo-potential becomes smaller, the gas-phase ions experience also a lower restoring force to the axis of the RF ion guide, resulting in the gas-phase ion cloud spreading out radially more than would be the case with higher pseudo-potential confinement. Nonetheless, the simulation result shows that the deviation is in the medium to low single digit percentage range as compared to an RF voltage amplitude that would not be changed in sync with the change in electric field strength, in other words, that would remain at its normalized value of unity at the right of the plot diagram.

Figure 7 presents schematically a further alternative embodiment. Also here, the description will focus on the differences to the embodiment expounded with reference to Figure 4. The embodiment of Figure 7 agrees with the embodiment of Figure 4 insofar as the RF ion guide features an RF ion tunnel section having stacked ring electrodes whose inner width does not change along its extension, Figure 7, panel (A). However, while a direction of gas-phase ion motion is likewise from left to right, in analogy to the embodiment of Figure 4, contrary to the latter, a gas flow direction runs from the right to the left, i.e., against the gas-phase ion motion. In this embodiment, the operation of the axial electric field is adapted such that it is increased during the scanning phase as indicated by the hollow arrow pointing from the initial solid line profile up to the ultimate dashed line profile in Figure 7, panel (B), instead of being reduced as explained for the embodiment from Figure 4. The gas flow conditions are kept constant throughout in this case.

Another consequence of flipping the directions of the two counteracting forces involved is that the axial lining-up of gas-phase ions on the (here) falling edge of the electric field during the quasi-stationary phase is inverted as compared to the embodiment from Figure 4, in that the small mass gas-phase ions of tendentially high mobility take their equilibrium position in an axial range on the falling edge close to the plateau, i.e., the axially most advanced position, whereas the high mass gas-phase ions come to rest in an axial range close to the entrance end of the RF ion guide where the electric field strength is initially highest. During the scanning phase, the rising electric field strength pushes the gas-phase ions toward the exit end of the RF ion guide, while the force imparted by the counteracting gas flow does not change. Since here the low mass gas-phase ions exit the RF ion guide first, optimal radial confining conditions can be established by concomitantly ramping up the RF voltage amplitude in sync with the electric field strength change, see Figure 7, panel (C), as compared to ramping it down as shown in Figure 4, panel (D). Needless to say that also some other parameter of the RF voltages could be changed in sync with the change in electric field strength, such as the clock frequency, while ensuring that its parameter profile is properly adapted to the different operation conditions shown.

Whereas it may be that, upon entering the RF ion guide at its entrance end, the small mass gas-phase ions have to pass a region of the RF ion guide with comparatively high RF voltage amplitude, potentially raising the risk of imparting too much kinetic energy to these gas-phase ions (confer the illustration in Figure 7, panel (B)), it is not expected to be too detrimental because the residence time in such region is comparatively short, on the order of fractions of a millisecond, so that any negative effect of RF ion heating remains low and kept under control.

Figure 8 illustrates the signal gain for a number of multiply charged peptides ionized by electrospray infusion of bovine serum albumin digest using principles of the present disclosure. The reference spectrum is a 100 millisecond TIMS analysis covering the mobility range 1.45-0.65 1/K0 with a static 500 Vpp applied RF with frequency 850 kHz, the second data set is with a time dependent RF potential applied, 500 Vpp ramped linearly down to 350 Vpp over 80 milliseconds with a 20 millisecond hold at 500 Vpp RF at the start of the TIMS analysis. Signal gain factors are reported for a number of ion species along with their mobility values, and the RF voltage applied at the elution time of the ion species of interest. The following peaks are used for illustration along with the peptide sequence and any modifications noted:

395.24 m/z - LVTDLTK
431.21 m/z - ECCDKPLLEK + 2 CAM (calmodulin modification)
461.75 m/z - AEFVEVTK
582.81 m/z - LVNELTEFAK
700.35 m/z - TVMENFVADVDK

As can be seen, the three tested peptides LVTDLTK, ECCDKPLLEK + 2 CAM, and AEFVEVTK show a consistent intensity increase of about 10 percent, whereas the intensity of the peptide TVMENFVADVDK remains virtually unchanged and the peptide LVNELTEFAK shows a slight decrease of about 7 percent, nonetheless evidencing the overall benefit of the methods that work according to principles of the present disclosure.

The invention has been shown and described above with reference to a number of different embodiments thereof. It will be understood, however, by a person skilled in the art that various aspects or details of the invention may be changed, or various aspects or details of different embodiments may be arbitrarily combined, if practicable, without departing from the scope of the invention. Generally, the foregoing description is for the purpose of illustration only, and not for the purpose of limiting the invention which is defined solely by the appended claims, including any equivalent implementations, as the case may be.

**Claims**

1.  A method for handling gas-phase ions which feature a physical-chemical property, comprising:

    - providing an RF ion guide being designed and configured to accommodate a plurality of axial ranges;
    - introducing gas-phase ions into the RF ion guide;
    - providing a field of counteracting forces within the RF ion guide and separating the introduced gas-phase ions such that gas-phase ions of a first value or first value range of the physical-chemical property reside within a first axial range of the RF ion guide and gas-phase ions of a second value or second value range of the physical-chemical property reside within a second axial range of the RF ion guide, the second axial range not being spatially congruent with the first axial range;
    - providing first RF voltages to the first axial range and second RF voltages to the second axial range, without generating any substantial corrugation of axial potential within the first axial range and second axial range, respectively, and spatially confining the gas-phase ions of the first value or first value range and second value or second value range such that they do not substantially escape laterally from the first axial range and second axial range, respectively;
    - changing a balance of the counteracting forces and translating the gas-phase ions of the first value or first value range from the first axial range to a third axial range of the RF ion guide, the third axial range not being spatially congruent with the first axial range;
    - providing third RF voltages to the third axial range, without generating any substantial corrugation of axial potential within the third axial range, and spatially confining the translated gas-phase ions of the first value or first value range such that they do not substantially escape laterally from the third axial range, the third RF voltages not being parametrically congruent with the second RF voltages; and
    - providing conditions which allow gas-phase ions of the first value or first value range residing within the third axial range to exit the RF ion guide.

2.  The method of Claim 1, wherein the physical-chemical property is one of (i) mass, (ii) mass to charge ratio, (iii) collision cross section, (iv) collision cross section to charge ratio, and (v) gas-phase ion mobility.

3.  The method of Claim 1 or Claim 2, wherein an axial range of the RF ion guide comprises a plurality of at least one of (i) stacked ring electrodes and (ii) perimeter-segmented stacked ring electrodes.

4.  The method of any one of Claims 1 to 3, wherein the RF ion guide comprises at least one of (i) one or more ion tunnel sections and (ii) one or more ion funnel sections.

5.  The method of any one of Claims 1 to 4, wherein gas-phase ions are introduced at a front end into the RF ion guide and exit at an opposing rear end of the RF ion guide.

6.  The method of any one of Claims 1 to 5, wherein the field of counteracting forces encompasses forces resulting from physical phenomena within the RF ion guide taken from among the group including or consisting of: a gas flow, a direct current voltage gradient, an electric field gradient, a transient voltage.

7.  The method of any one of Claims 1 to 6, wherein the first RF voltages and second RF voltages are one of (i) substantially parametrically identical and (ii) not substantially parametrically identical.

8.  The method of any one of Claims 1 to 7, wherein the third RF voltages substantially differ from the second RF voltages by at least one of (i) amplitude, (ii) clock frequency, (iii) phase, and (iv) duty cycle.

9.  The method of any one of Claims 1 to 8, wherein the conditions which allow gas-phase ions of the first value or first value range residing within the third axial range to exit the RF ion guide comprise one of a (i) substantially continuous and (ii) stepwise continuous changing of the balance of the counteracting forces.

10. The method of any one of Claims 1 to 9, wherein the gas-phase ions of the second value or second value range are translated from the second axial range to a fourth axial range of the RF ion guide, the fourth axial range not being spatially congruent with the second axial range, at substantially a same time as the gas-phase ions of the first value or first value range are translated from the first axial range to the third axial range, and wherein fourth RF voltages are applied to the fourth axial range, without generating any substantial corrugation of axial potential within the fourth axial range, and the translated gas-phase ions of the second value or second value range are spatially confined such that they do not substantially escape laterally from the fourth axial range, the fourth RF voltages not being parametrically congruent with both the first as well as the third RF voltages.

11. The method of Claim 10, further comprising providing, subsequently, conditions which allow gas-phase ions of the second value or second value range residing within the fourth axial range to exit the RF ion guide.

12. The method of Claim 11, further comprising substantially maintaining a spatial separation of the gas-phase ions of the first value or first value range and the second value or second value range, established by their residing within the first axial range and second axial range, respectively, after they have exited the RF ion guide.

13. The method of any one of Claims 10 to claim 12, wherein the third axial range is substantially spatially congruent with the second axial range.

14. The method of any one of Claims 10 to 13, wherein the fourth RF voltages are substantially parametrically identical with the second RF voltages.

15. The method of any one of Claims 1 to 14, wherein not spatially congruent means that two axial ranges show an overlap taken from among the group including or consisting of, in percent: less than 80, less than or equal to 75, 70, 65, 60, 55, 50, 45, 40, 35, 30, 25, 20, 15, 10, 5, more than 0, and any other suitable percentage between about less than 80 and more than 0 percent, or do not overlap at all which equates with 0 percent spatial coinciding.

16. The method of any one of Claims 1 to 15, wherein at least one of the (i) first RF voltages, (ii) second RF voltages, (iii) third RF voltages, and (iv) fourth RF voltages are set such that they do not generate any substantial corrugation of axial potential within the RF ion guide.

17. The method of any one of Claims 1 to 16, wherein the first, second, third, and fourth RF voltages generate a radial pseudo-potential well within the corresponding axial range of the RF ion guide, which substantially confines gas-phase ions.

18. The method of Claim 17, wherein, having regard to an effective temperature $T_{eff}$ of gas-phase ions depending on three terms according to:

$$T_{eff} = \underbrace{\frac{\mu}{m_g} T}_{gas} + \underbrace{\frac{\mu}{M} \frac{2 q U_{eff}}{3 k_B}}_{pseudo-potential} + \underbrace{\frac{\mu}{3 k_B} \langle (K E_z)^2 \rangle}_{DC-potential}$$

where T = gas temperature; $m_g$ = mass of gas atoms/molecules; M = mass of gas-phase ions; q = charge of gas-phase ions; $\mu$ = reduced mass; $k_B$ = Boltzmann constant; $U_{eff}$ = pseudo-potential; K = mobility at the gas temperature and pressure in the axial range where a gas-phase ion resides; and $E_z$ = field strength of an axial electric DC field;
a parametric configuration of the first, second, third, and fourth RF voltages is each chosen such that the pseudo-potential middle term shown above is substantially minimized.

19. The method of any one of Claims 1 to 18, wherein a parameter difference between the first RF voltages and second RF voltages amounts to a percentage taken from among the group including or consisting of: 19/20, 9/10, 17/20, 4/5, 3/4, 7/10, 13/20, 3/5, 11/20, 1/2, any other suitable percentage between about 19/20 and ½, or the inverse of the foregoing.

20. An assembly for handling gas-phase ions which feature a physical-chemical property, comprising:

- a source of gas-phase ions;
- an RF ion guide being designed and configured to accommodate a plurality of axial ranges and being located downstream from, and being in fluid communication with the source of gas-phase ions for receiving gas-phase ions therefrom;
- an ion processing device being located downstream from, and being in fluid communication with the RF ion guide for receiving gas-phase ions therefrom; and
- a guidance and/or control system communicating with the source of gas-phase ions, the RF ion guide, and the ion processing device, wherein the guidance and/or control system is designed, configured and programmed to initiate execution of a method according to any one of Claims 1 to 19.

**FIGURE 1**

10

12

14

16

18

20

22

24

26

28

30

32

Figure 7. Equipotential lines of a rotationally symmetric ring electrode trap, defined in Eq. (34). The actual shape of the electrodes in marked in black (see Section III E). The letters $a$–$f$ indicate locations along which Fig. 8 shows cuts through the effective potential.

## FIGURE 2 (Prior Art)

Effective potentials $V^*$. The left panel illustrates that for the ring electrode trap $V^*$ increases proportional to $\ell$, in comparison to the $r^2$ and $r^6$ dependence of the quadrupole and the octopole. The letters $a-f$ refer to locations marked in Fig. 7. In the axial direction (right panel) the effective potential of the ring electrode trap has a weak corrugation ($a-c$), which only becomes pronounced very close to the electrodes ($d$).

## FIGURE 3 (Prior Art)

FIGURE 4

EP 4 718 068 A1

(A)

(B)

Rising edge of electric field     Plateau

Gas flow

Electric DC-field $E_z$

(C)

RF voltage amplitude

**FIGURE 5**

FIGURE 6

**(A)**

Falling edge of electric field | Plateau

**(B)**

Electric DC-field $E_z$

Gas flow

**(C)**

RF voltage amplitude

*FIGURE 7*

FIGURE 8

EP 4 718 068 A1

Europäisches
Patentamt

European
Patent Office

Office européen
des brevets

# EUROPEAN SEARCH REPORT

**Application Number**

EP 25 20 2333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/049660 A1 (RÄTHER OLIVER [DE] ET AL) 13 February 2020 (2020-02-13) | 1-7, 9-17,19, 20 | INV. G01N27/623 |
| Y | * paragraph [0013] - paragraph [0025] * | 8,16 | |
| A | * paragraph [0040] - paragraph [0054] * <br> * paragraphs [0026], [0027]; figures 1-11 * <br> * paragraph [0011] * | 18 | |
| Y | EP 2 084 732 B1 (MICROMASS LTD [GB]) 4 April 2018 (2018-04-04) <br> * paragraph [0075] - paragraph [0078] * | 8 | |
| Y | EP 2 089 895 B1 (MICROMASS LTD [GB]) 4 October 2017 (2017-10-04) <br> * paragraph [0101] - paragraph [0102]; figures 2, 3 * | 16 | |
| A | EP 3 165 913 A1 (BRUKER DALTONIK GMBH [DE]) 10 May 2017 (2017-05-10) <br> * the whole document * | 1-20 | |

**TECHNICAL FIELDS SEARCHED (IPC)**

G01N
H01J

The present search report has been drawn up for all claims

| Place of search | Date of completion of the search | Examiner |
|---|---|---|
| Munich | 30 January 2026 | Knoll, Stephan |

EPO FORM 1503 03.82 (P04C01)

## ANNEX TO THE EUROPEAN SEARCH REPORT
## ON EUROPEAN PATENT APPLICATION NO.

EP 25 20 2333

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2026

| Patent document cited in search report | | | Publication date | Patent family member(s) | | Publication date |
|---|---|---|---|---|---|---|
| US 2020049660 | A1 | | 13-02-2020 | CN | 107464736 A | 12-12-2017 |
| | | | | EP | 3252460 A1 | 06-12-2017 |
| | | | | US | 2017350860 A1 | 07-12-2017 |
| | | | | US | 2020049660 A1 | 13-02-2020 |
| EP 2084732 | B1 | | 04-04-2018 | CA | 2663016 A1 | 24-04-2008 |
| | | | | EP | 2084732 A2 | 05-08-2009 |
| | | | | GB | 2443515 A | 07-05-2008 |
| | | | | GB | 2471581 A | 05-01-2011 |
| | | | | JP | 5346294 B2 | 20-11-2013 |
| | | | | JP | 2010507207 A | 04-03-2010 |
| | | | | US | 2010294923 A1 | 25-11-2010 |
| | | | | US | 2014131566 A1 | 15-05-2014 |
| | | | | WO | 2008047101 A2 | 24-04-2008 |
| EP 2089895 | B1 | | 04-10-2017 | CA | 2670871 A1 | 12-06-2008 |
| | | | | EP | 2089895 A2 | 19-08-2009 |
| | | | | JP | 5198464 B2 | 15-05-2013 |
| | | | | JP | 2010511985 A | 15-04-2010 |
| | | | | US | 2014158878 A1 | 12-06-2014 |
| | | | | US | 2015170896 A1 | 18-06-2015 |
| | | | | WO | 2008068515 A2 | 12-06-2008 |
| EP 3165913 | A1 | | 10-05-2017 | CN | 107039231 A | 11-08-2017 |
| | | | | EP | 3165913 A1 | 10-05-2017 |
| | | | | US | 9546980 B1 | 17-01-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060163470 A1
- WO 2007079588 A1
- WO 2008047101 A2
- US 9972480 B2
- WO 2015097462 A1
- US 20200049660 A1
- US 7838826 B1

**Non-patent literature cited in the description**

- **DIETER GERLICH**. Inhomogeneous RF Fields: A Versatile Tool for the Study of Processes with Slow Ions. *Advances in Chemical Physics: State-Selected and State-To-State Ion-Molecule Reaction Dynamics*, 1992, vol. 82 (1)
- **ALEKSEY V. TOLMACHEV et al.** *Anal. Chem.*, 2000, vol. 72, 970-978
- **KARSTEN MICHELMANN et al.** *J. Am. Soc. Mass Spectrom.*, 2015, vol. 26, 14-24
- **JOSHUA A. SILVEIRA et al.** *J. Am. Soc. Mas Spectrom.*, 2016, vol. 27, 585-595
- **KEVIN GILES et al.** *Rapid Commun. Mass Spectrom.*, 2004, vol. 18, 2401-2414
- **FLORIAN MEIER et al.** *J Proteome Res.*, 04 December 2015, vol. 14 (12), 5378-5387
- **JOHN MCLEAN**. *J Am Soc Mass Spectrom*, 2009, vol. 20, 1775-1781